# EUROPÄISCHE PATENTANMELDUNG

(11) **EP 1 707 926 A2**
(43) Veröffentlichungstag der Anmeldung: **04.10.2006**
(21) Anmeldenummer: 06005993.8
(22) Anmeldetag: 23.03.2006
(51) Int. Cl.: G01G 19/34, G01G 13/24

(54) **Anlage zum gravimetrischen Mischen von Schüttgut-Komponenten**

(30) Priorität: 01.04.2005 DE 102005014930
(71) Anmelder: AZO-Holding GmbH, 74706 Osterburken (DE)
(72) Erfinder: Baumann, Rudolf, D-74706 (DE)
(74) Vertreter: Lichti, Heiner

(57) **Zusammenfassung**

Eine Anlage zum gravimetrischen Zusammenführen einzelner Schüttgut-Komponenten aus aufgereihten Vorratsbehältern mit je einer Dosiereinrichtung mit einem Schüttgut-Zulauf zu einer Mischung in einem Transportbehälter, der mit einer wiegeeinrichtung zusammenwirkt und unterhalb der Schüttgut-Zuläufe der Vorratsbehälter verfahrbar und je nach Mischungsrezeptur nacheinander mit den Zuläufen der entsprechenden Vorratsbehälter in Verbindung bringbar und nach dem Einwiegen der jeweiligen Kopmonenten zu einer Entleerstelle verbringbar ist, zeichnet sich dadurch aus, dass unterhalb jedes Schüttgut-Zulaufs eine stationäre Wiegeeinrichtung vorgesehen ist und zwischen den Zuläufen und den Wiegeeinrichtungen Fahrschienen für ein den Transportbehälter aufnehmendes Shuttle angeordnet sind, und dass jede Wiegeeinrichtung eine Hubeinrichtung aufweist, mittels der der Transportbehälter aus dem Shuttle aushebbar und zum Einwiegen einer Komponente mit dem darüber befindlichen Zulauf in Verbindung bringbar ist.

## Beschreibung

Die Erfindung betrifft eine Anlage zum gravimetrischen Zusammenführen einzelner Schüttgut-Komponenten aus aufgereihten Vorratsbehältern mit je einer Dosiereinrichtung und einem Schüttgut-Zulauf zu einer Mischung in einem Transportbehälter, der mit einer Wiegeeinrichtung zusammenwirkt und unterhalb der Schüttgut-Zuläufe der Vorratsbehälter verfahrbar und je nach Mischungsrezeptur nacheinander mit den Zuläufen der entsprechenden Vorratsbehälter in Verbindung bringbar und nach dem Einwiegen der jeweiligen Komponenten zu einer Entleerstelle verbringbar ist.

Es ist bekannt, den Transportbehälter als Behälterwaage auszubilden, und diese Transport-/Wiegeeinheit entsprechend der zusammenzustellenden Mischungsrezeptur an den die Komponenten der Mischung enthaltenden Vorratsbehältern nacheinander zu positionieren und an den jeweiligen Vorratsbehältern die entsprechende Komponente einzuwiegen, bis schließlich die vollständige Mischung oder auch Teilchargen im Wiegebehälter enthalten sind und dieser zu einer Entleerstelle, insbesondere zu einem Mischer, verbracht wird. Die Durchsatzleistung einer solchen Anlage ist beschränkt, weil stets nur ein Wiegebehälter in der Anlage bewegt werden kann.

Der Erfindung liegt die Aufgabe zugrunde, die Durchsatzleistung der eingangs beschriebenen Anlage zu erhöhen und im Bedarfsfall um weitere Vorratsbehälter zu erweitern, ohne die Durchsatzleistung zu verringern.

Diese Aufgabe wird erfindungsgemäß dadurch gelöst, dass unterhalb jedes Schüttgut-Zulaufs eine stationäre Wiegeeinrichtung vorgesehen ist und zwischen den Zuläufen und den Wiegeeinrichtungen Fahrschienen für ein den Transportbehälter aufnehmendes Shuttle angeordnet sind, und dass jede Wiegeeinrichtung eine Hubeinrichtung aufweist, mittels der der Transportbehälter aus dem Shuttle aushebbar und zum Einwiegen einer Komponente mit dem darüber befindlichen Zulauf in Verbindung bringbar ist.

Bei der erfindungsgemäß ausgebildeten Anlage ist der Transportbehälter in das Shuttle eingehängt und wird von diesem zwischen den Führungsschienen verfahren. Im Bereich jedes Zulaufs eines Vorratsbehälters kann das Shuttle mit dem eingehängten Transportbehälter positioniert werden. Jede stationäre Wiegeeinrichtung besteht aus unterhalb der Fahrschienen und parallel zu diesen angeordneten Wägezellen, wobei die Wägezellen mit der Hubeinrichtung angehoben und der Transportbehälter auf den Wägezellen abgestützt wird und bei der weiteren Bewegung der Hubeinrichtung aus dem Shuttle ausgehoben wird, bis der Transportbehälter mit dem Zulauf in Verbindung kommt. Währenddessen läuft die Dosiereinrichtung des entsprechenden Vorratsbehälters an und dosiert die von der Waagenelektronik gesteuerte Menge in den Transportbehälter. Befindet sich die gewünschte Menge der in diesem Vorratsbehälter enthaltenen Komponente im Transportbehälter, wird die Dosiereinrichtung von der Waagenelektronik - ggf. mit einem geringen Vorlauf - abgeschaltet, der Transportbehälter auf das Shuttle abgesenkt und schließlich das Shuttle an den nächsten Vorratsbehälter verfahren und positioniert, um nach dem Ausheben die nächste Komponente aufzunehmen. Dieser Zyklus wiederholt sich gegebenenfalls an weiteren Vorratsbehältern mit anderen Komponenten, bis die gewünschte Mischungsrezeptur in dem Transportbehälter zusammengestellt ist. Anschließend wird der Transportbehälter mit dem Shuttle aus der Anlage ausgeschleust und zu einer Entleerstelle verbracht, an der der Inhalt beispielsweise in einen Mischer entleert wird. Die unter jedem Schüttgut-Zulauf angeordnete Wiegeeinrichtung kann sich auch über mehrere Schüttgut-Zuläufe erstrecken.

In einer bevorzugten Ausführungsform ist das Shuttle nach dem Ausheben des Transportbehälters und während des Einwiegens der Komponente aus einem der Vorratsbehälter zur Aufnahme eines neuen Transportbehälters und zum Verbringen desselben zu einem anderen Vorratsbehälter verfahrbar.

Auf diese Weise wird die Totzeit beim Einwiegen einer Komponente genutzt, um mit dem Shuttle andere Transportbehälter aufzunehmen und diese zum Einwiegen anderer Komponenten im Bereich eines anderen Vorratsbehälters zu positionieren. Dieser Vorgang kann entsprechend der Verweilzeit der Transportbehälter an den einzelnen Vorratsbehältern so automatisiert werden, dass praktisch keine Totzeiten entstehen.

In weiterhin bevorzugter Ausführung besteht das Shuttle aus zwei unabhängig voneinander auf je einer Fahrschiene verfahrbaren Schlitten, die bei Fahrt mit einem Transportbehälter über diesen miteinander verbunden sind, wobei nur ein Schlitten angetrieben und der andere Schlitten durch Freischaltung seines Antriebs mitführbar ist, während die Schlitten bei Fahrt ohne Transportbehälter getrennt verfahrbar sind.

Bei dieser Ausführung wird nur einer der beiden Schlitten angetrieben und der andere Schlitten mitgeschleppt, während bei der Fahrt ohne Transportbehälter die Antriebe beider Schlitten im Eingriff stehen und diese unabhängig voneinander am neuen Einsatzort positioniert werden können. An der neuen Position, die von beiden Schlitten getrennt voneinander angefahren worden ist, wird dann ein neuer Transportbehälter übernommen, der dann beide Schlitten wieder zu einem Shuttle verbindet. Selbstverständlich können auch mehrere Shuttles aus je zwei Schlitten innerhalb der Anlage auf einem Fahrschienensystem vorgesehen sein, um eine hohe Durchsatzleistung an Transportbehältern zu ermöglichen.

Zweckmäßigerweise besitzt jeder Transportbehälter an seinem Deckel einen Einlauf, der beim Ausheben aus dem Shuttle dichtend am Zulauf des Vorratsbehälters angedockt werden kann. Stattdessen ist es auch möglich, den Einlauf auf Spalt mit dem Zulauf zu bringen und den Spalt während des Einwiegens der Komponente zu besaugen, um ein Austreten der Komponente nach außen zu verhindern.

Im Sinne einer Vergrößerung der Durchsatzleistung oder auch der Erhöhung der Anzahl unterschiedlicher Komponenten können zwei oder mehrere Reihen (Linien) von Vorratsbehältern und eine der Anzahl der Reihen entsprechende Anzahl von Fahrschienensystemen mit Shuttles und Wiegeeinrichtungen vorgesehen sein, wobei am Kopf der Fahrschienensysteme ein Quertransport vorgesehen ist, auf den der Vorratsbehälter verbracht wird, um beispielsweise in eine andere Linie umgesetzt zu werden.

Bei einer solchen Anlage können die Transportbehälter nach Aufnahme bestimmter Komponenten aus den Vorratsbehältern der einen Reihe am Kopf des Fahrschienensystems ausgeschleust und am Kopf des anderen Fahrschienensystems in dieses eingeschleust werden, um aus den dort angeordneten Vorratsbehältern weitere Komponenten aufzunehmen. Sie können über den Quertransport auch aus der Anlage ausgeschleust und an die Entleerstelle verbracht werden.

Gemäß einem vorteilhaften Ausführungsbeispiel weist jeder Transportbehälter an gegenüberliegenden Seiten zwei auf unterschiedlicher Höhe angeordnete Auflager auf, deren Abstand voneinander etwa dem Abstand zwischen dem Shuttle und der Wiegeeinrichtung in deren abgesenkter Position entspricht.

Über das jeweils obere Auflager ist der Transportbehälter in die Schlitten des Shuttles eingehängt, während das untere Auflager zum Ausheben des Transportbehälters aus dem Shuttle mittels der Hubeinrichtung der Wiegeeinrichtung dient.

Die Auflager können Teil eines den Transportbehälter aufnehmenden Rahmens bilden.

Die erfindungsgemäß ausgebildete Anlage gibt die Möglichkeit, die Fahrschienen und die Wiegeeinrichtungen mittels einer Tragkonstruktion hängend und bodenfrei anzuordnen.

Damit ist der große Vorteil verknüpft, dass die Teile der Anlage, insbesondere auch die bewegten Teile nicht nur von der Seite, sondern auch von unten her zugänglich sind und insbesondere der Boden unterhalb der Anlage problemlos sauber gehalten werden kann, was insbesondere in der Lebensmittel- und der pharmazeutischen Industrie von Bedeutung ist.

Zu diesem Zweck können die Vorratsbehälter mit den Dosiereinrichtungen auf einer Gebäudedecke angeordnet und die Zuläufe durch diese hindurchgeführt sein, wobei die Tragkonstruktion an der Unterseite der Gebäudedecke befestigt ist. Stattdessen kann die Tragkonstruktion auch Teil einer auf dem Boden stehenden Stahlkonstruktion sein, auf der die Vorratsbehälter angeordnet sind.

Nachstehend ist die Erfindung anhand von in der Zeichnung gezeigten Ausführungsbeispielen beschrieben. In der Zeichnung zeigen:
- Fig. 1: eine schematische Ansicht eines Teils einer Anlage;
- Fig. 2: eine Ansicht eines Transportbehälters;
- Fig. 3: eine um 90° gedrehte Ansicht des Transportbehälters gemäß Fig. 2;
- Fig. 4: eine der Fig. 2 entsprechende Ansicht eines Teils einer Anlage mit eingesetzten Transportbehältern;
- Fig. 5: einen Schnitt V-V gemäß Fig. 4;
- Fig. 6: einen Schnitt VI-VI gemäß Fig. 4 und
- Fig. 7: eine Anlage mit zwei parallelen Reihen von Vorratsbehältern und entsprechenden Fahrschienensystemen.

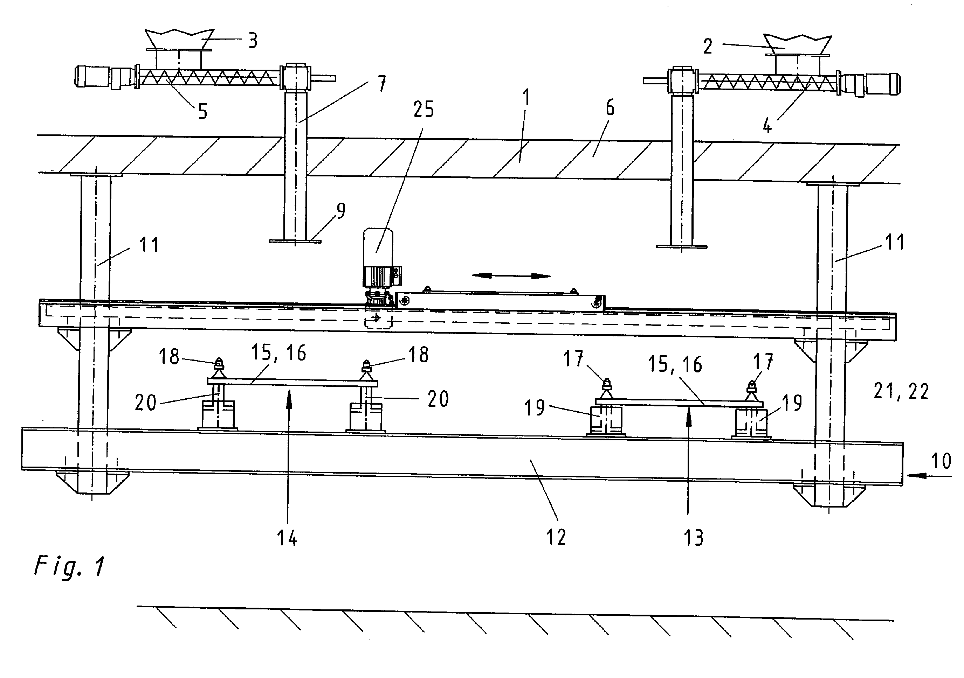

In Fig. 1 ist eine Zwischendecke 1 eines Betriebsgebäudes wiedergegeben, auf der zwei oder mehr Vorratsbehälter 2, 3 hintereinander bzw. nebeneinander aufgereiht sind. Jeder Vorratsbehälter 2, 3 weist eine Dosiereinrichtung 4, 5 und einen Zulauf 6, 7 für die ihn jeweils enthaltende Komponente auf. Die Vorratsbehälter 2, 3 sind nur in ihrem unteren Abschnitt dargestellt. Es handelt sich um herkömmliche Silos oder dergleichen. Die Zuläufe 6, 7 durchdringen die Zwischendecke 1 und weisen an ihrem unteren Ende einen Flansch 8 bzw. 9 auf.

An der Unterseite der Zwischendecke 1 ist eine Tragkonstruktion 10 aus Hängestützen 11 und diese verbindenden Balken 12 befestigt, die die nachfolgend beschriebenen Anlagenteile aufnehmen.

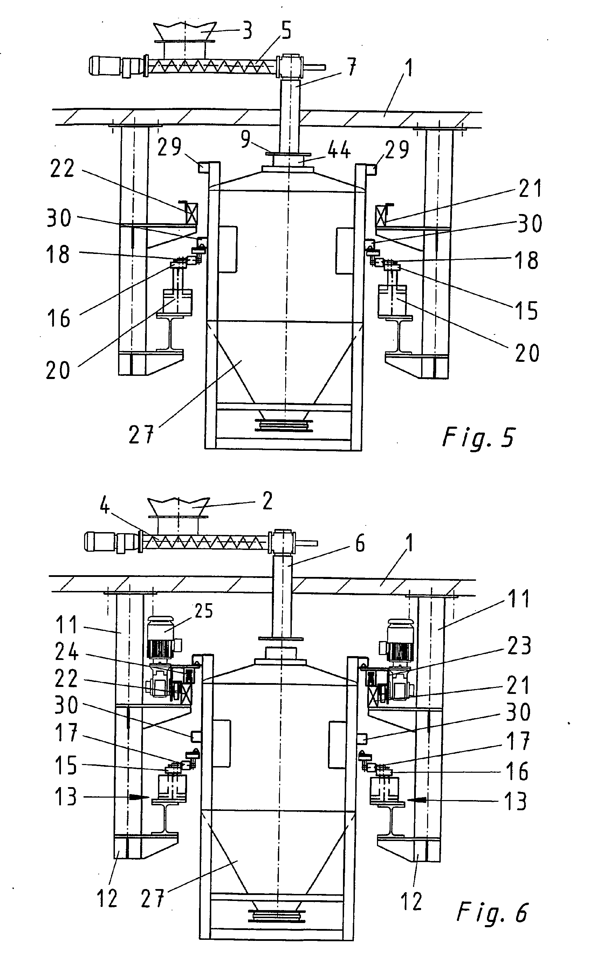

Jedem Vorratsbehälter 2, 3 ist eine ortsfeste Wiegeeinrichtung 13 bzw. 14 zugeordnet, die jeweils zwei parallel einander gegenüberliegende Balken 15, 16 aufweist (Fig. 5 und 6), die an ihrer Oberseite Wägezellen 17 bzw. 18 tragen. Ferner weist jede Wiegeeinrichtung eine Hubeinrichtung 19, 20 auf, mittels der die Balken 15 bzw. 16 aus der in Fig. 1 rechts wiedergegebenen abgesenkten Position in die in Fig. 1 links wiedergegebene angehobene Position bewegt werden können. Zwischen jedem Zulauf 6, 7 einerseits und jeder Wiegeeinrichtung 13 bzw. 14 andererseits sind zwei parallele Fahrschienen 21, 22 an der Tragkonstruktion 10 befestigt. Auf jeder Fahrschiene 21, 22 ist wenigstens je ein Schlitten 23, 24 in Richtung des Doppelpfeils verfahrbar. Jeder Schlitten 23, 24 weist einen Antrieb 25 auf und ist an seiner Oberseite mit Zentrierzapfen 26 für die Aufnahme eines Transportbehälters versehen, der die beiden Schlitten zu einem Shuttle verbindet.

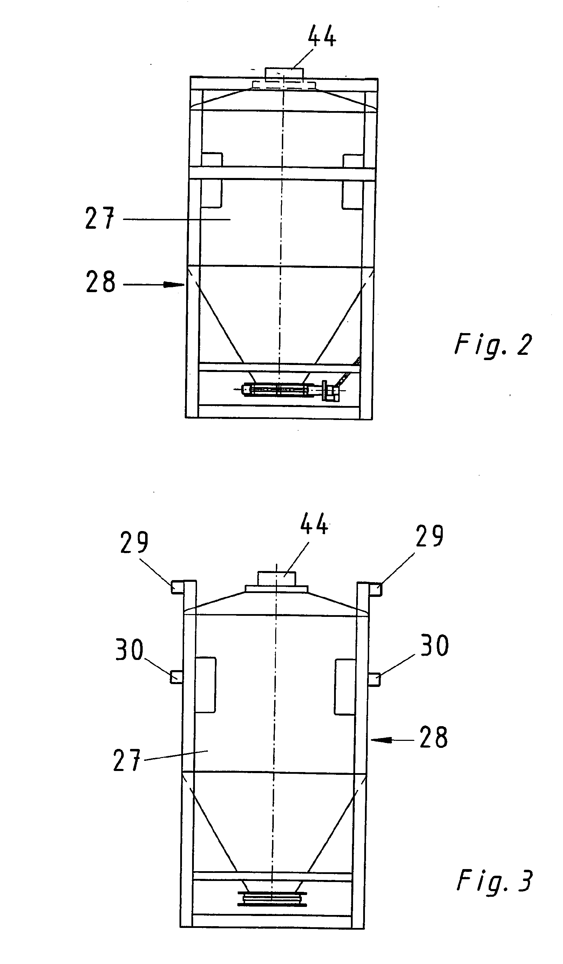

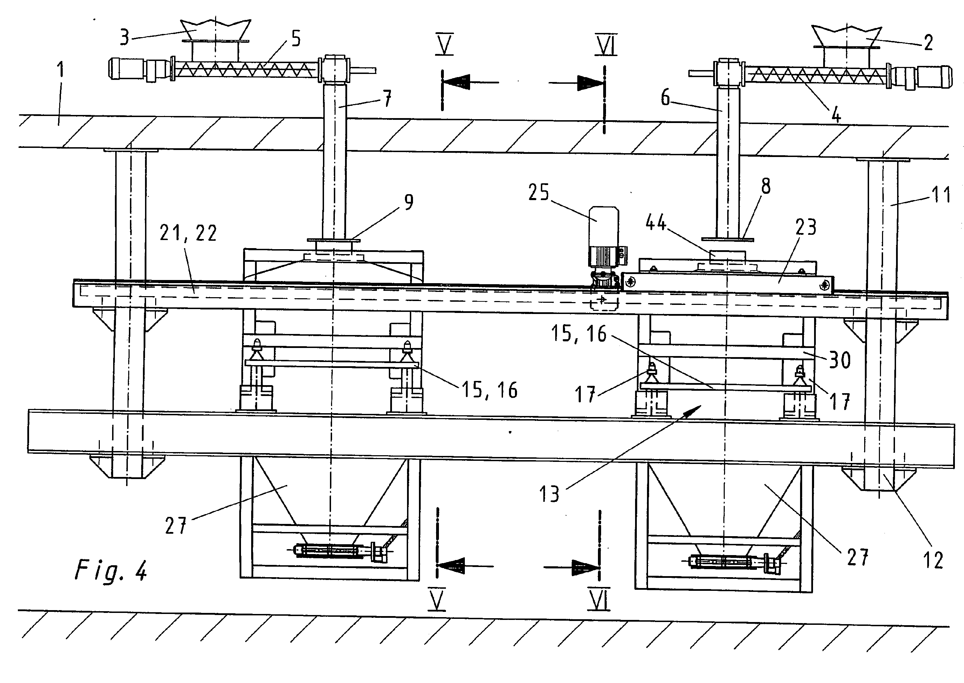

In Fig. 2 und 3 ist eine Ausführungsform eines Transportbehälters 27 wiedergegeben, der an seinem Deckel einen Einlauf 44 und an seinem unteren konischen Ende einen öffenbaren Boden aufweist. Der Transportbehälter 27 ist in einen Tragrahmen 28 eingesetzt, der an zwei gegenüberliegenden Seiten nach außen greifende Auflager 29 und 30 aufweist. Diese Auflager weisen einen Abstand voneinander auf, der etwas größer ist als der Abstand zwischen den Zentrierzapfen des Shuttles 23, 24 und den Wägezellen 17 in der abgesenkten Position (siehe Fig. 1). In der Transportstellung greifen die Zentrierzapfen 26 der Schlitten 23, 24 in die Auflager 29 ein, so dass der Transportbehälter 27 in den Schlitten 23, 24 des Shuttles und zwischen den parallelen Fahrschienen 21, 22 hängt, wie in den Fig. 4 bis 6 näher dargestellt. Der in den oberen Auflagern 29 rastend eingehängte Transportbehälter 27 wird in der in Fig. 4 rechts wiedergegebenen Position mittels des Shuttles 23, 24 und einer der Antriebe 25 auf den Fahrschienen 21, 22 verfahren, so dass er mit seinem Einlauf 28 unter dem Flansch 8 des Zulaufs 6 hindurchbewegt werden kann. Sein unteres Auflager 30 bewegt sich mit ausreichendem Abstand oberhalb der Wägezellen 17 der Wiegeeinrichtung 13 vorbei (siehe Fig. 4 rechte Hälfte und Fig. 6). Bei Weiterfahrt erreicht der Transportbehälter 27 die Position oberhalb der Wiegeeinrichtung 14 und unterhalb des Zulaufs 7 des Vorratsbehälters 3, um einen bestimmten Gewichtsanteil der darin enthaltenen Komponente aufzunehmen.

Hat der Transportbehälter 27 seine Position erreicht, so wird die Hubeinrichtung 20 eingeschaltet, um die Balken 15, 16 mit den Wägezellen 18 anzuheben, die über entsprechende Nocken in die unteren Auflager 30 einrasten. Durch weiteres Anheben wird der Transportbehälter 27 aus den Schlitten 23, 24 ausgehoben und mit seinem Einlauf 44 an den Flansch 9 des Zulaufs 7 des Vorratsbehälters 3 angedockt (Fig. 4 linke Hälfte und Fig. 5). In diesem Augenblick wird die Dosiereinrichtung 5 des Vorratsbehälters 3 in Betrieb gesetzt und die darin enthaltene Komponente solange zudosiert, bis die Wägezellen 16 der Wiegeeinrichtung 14 das gewünschte Gewicht sensiert haben. Dann wird die Dosiereinrichtung 5 durch die Waagenelektronik abgeschaltet. Während des Einwiegens können die freigestellten Schlitten 23, 24 getrennt angetrieben an eine andere Position verfahren werden, um beispielsweise einen neuen Transportbehälter aufzunehmen und diesen in eine Position unter einen Vorratsbehälter zu bringen und dort eine andere Komponente einzuwiegen. Schließlich werden die von diesem Transportbehälter freigestellten Schlitten 23, 24 wieder an die Position gemäß Fig. 5 verfahren und mittels eines Positionsgebers angehalten. Daraufhin wird die Hubeinrichtung 20 abgesenkt, so dass die unteren Auflager 30 freigesetzt werden, während die oberen Auflager 29 auf dem Shuttle zentrierend einrasten. Der Shuttle kann dann in die Position gemäß Fig. 6 (rechte Hälfte der Fig. 4) verfahren werden, um nach Ausheben aus dem Shuttle 23, 24 und Andocken an dem Zulauf 6 eine weitere Komponente aus dem Vorratsbehälter 2 aufzunehmen. Es spielt sich der gleiche Vorgang ab, wie in Bezug auf Fig. 5 (linke Hälfte der Fig. 4) beschrieben.

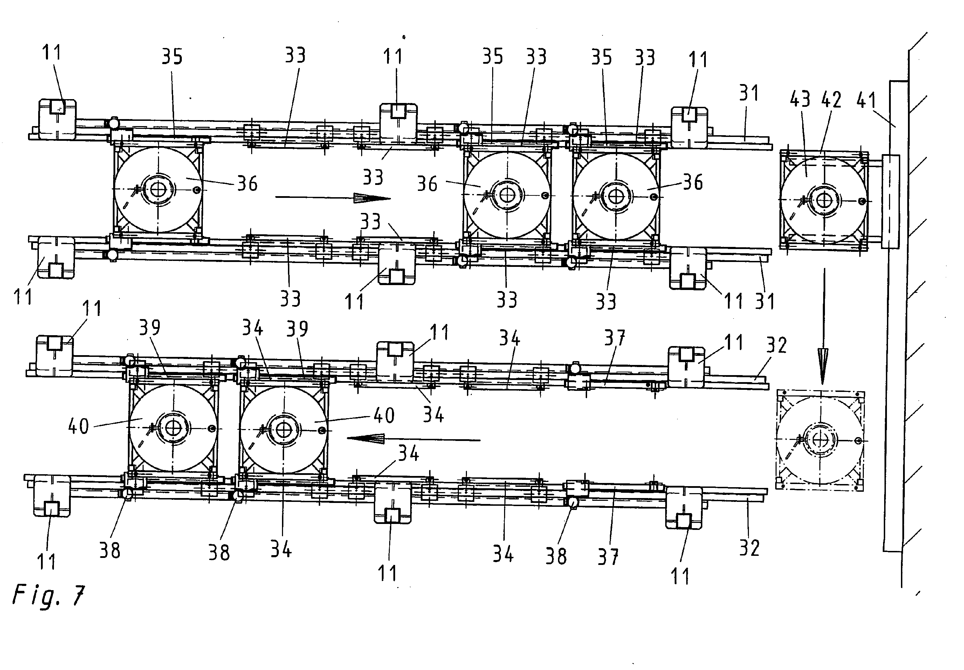

Fig. 7 zeigt ein Ausführungsbeispiel, bei dem zwei Reihen von nicht gezeigten Vorratsbehältern mit ggf. unterschiedlichen Komponenten vorgesehen sind. Es sind zwei parallele Fahrschienensysteme mit Fahrschienen 31 und 32 unter je einer Reihe von Vorratsbehältern angeordnet. Jeder der Fahrschienen 31 und 32 sind unterhalb jedes Vorratsbehälters die Wiegeeinrichtungen 33 bzw. 34 zugeordnet. Im übrigen ist die Anordnung und Ausbildung der Wiegeeinrichtungen dieselbe wie zuvor beschrieben. Auf jeder Fahrschiene 31 bzw. 32 bewegen sich beim gezeigten Ausführungsbeispiel drei Shuttles. In der oberen Linie in Fig. 7 sind die drei Shuttles 35 mit je einem Transportbehälter 36 belegt. In der unteren Linie in Fig. 7 sind zwei Schlitten 37 mit Antrieb 38 angedeutet, die zur Übernahme eines Transportbehälters bereitstehen, während zwei weitere Shuttles 39 mit Transportbehältern 40 besetzt sind.

Am Kopf der Fahrschienen 31 bzw. 32 ist ein Quertransport 41 vorgesehen, auf den der Transportbehälter 43 verbracht wird. In dem Transportbehälter 43 befinden sich beispielsweise die in der oberen Linie eingewogenen Komponenten. Er kann mittels des Quertransportes 41 in die strichpunktierte Position verbracht und von dort in die untere Linie eingeschleust werden, um dort weitere Komponenten aufzunehmen, oder aus der Anlage ausgeschleust werden.

## Patentansprüche

1. Anlage zum gravimetrischen Zusammenführen einzelner Schüttgut-Komponenten aus aufgereihten Vorratsbehältern (2,3) mit je einer Dosiereinrichtung (4,5) mit einem Schüttgut-Zulauf (6,7) zu einer Mischung in einem Transportbehälter (27), der mit einer Wiegeeinrichtung (23,24) zusammenwirkt und unterhalb der Schüttgut-Zuläufe (6,7) der Vorratsbehälter (2,3) verfahrbar und je nach Mischungsrezeptur nacheinander mit den Zuläufen (6,7) der entsprechenden Vorratsbehälter (2,3) in Verbindung bringbar und nach dem Einwiegen der jeweiligen Kopmonenten zu einer Entleerstelle verbringbar ist, **dadurch gekennzeichnet, dass** unterhalb jedes Schüttgut-Zulaufs (6,7) eine stationäre Wiegeeinrichtung (13,14) vorgesehen ist und zwischen den Zuläufen (6,7) und den Wiegeeinrichtungen (13,14) Fahrschienen (21,22) für ein den Transportbehälter (27) aufnehmendes Shuttle (23,24) angeordnet sind, und dass jede Wiegeeinrichtung (13,14) eine Hubeinrichtung (19,20) aufweist, mittels der der Transportbehälter (27) aus dem Shuttle (23,24) aushebbar und zum Einwiegen einer Komponente mit dem darüber befindlichen Zulauf (6,7) in Verbindung bringbar ist.

2. Anlage nach Anspruch 1, **dadurch gekennzeichnet, dass** das Shuttle (23,24) nach dem Ausheben des Transportbehälters und während des Einwiegens der Komponente zur Aufnahme eines neuen Transportbehälters und zum Verbringen desselben zu einem anderen Vorratsbehälter verfahrbar ist.

3. Anlage nach Anspruch 1, **dadurch gekennzeichnet, dass** das Shuttle aus zwei unabhängig voneinander verfahrbaren Schlitten (23,24) besteht, die bei Fahrt mit einem Transportbehälter (27) über diesen miteinander verbunden sind, wobei nur ein Schlitten angetrieben und der andere Schlitten durch Freischaltung seines Antriebs (25) mitführbar ist, während die Schlitten (23,24) bei Fahrt ohne Transportbehälter (27) getrennt verfahrbar sind.

4. Anlage nach einem der Ansprüche 1 bis 3, **dadurch gekennzeichnet, dass** mehrere Shuttles (23,24) auf einem Fahrschienensystem (31,32) vorgesehen sind.

5. Anlage nach einem der Ansprüche 1 bis 4, **dadurch gekennzeichnet, dass** der Transportbehälter (27) an seinem Deckel einen Einlauf (44) aufweist.

6. Anlage nach einem der Ansprüche 1 bis 5, **dadurch gekennzeichnet, dass** der Transportbehälter (27) beim Ausheben aus dem Shuttle (23,24) mit seinem Einlauf (44) dichtend am Zulauf (6,7) des Vorratsbehälters (27) andockbar ist.

7. Anlage nach einem der Ansprüche 1 bis 6, **dadurch gekennzeichnet, dass** der Transportbehälter (27) beim Ausheben aus dem Shuttle (23,24) mit seinem Einlauf (44) auf Spalt mit dem Zulauf (6,7) bringbar ist und der Spalt während des Einwiegens besaugt wird.

8. Anlage nach einem der Ansprüche 1 bis 7, **dadurch gekennzeichnet, dass** zwei oder mehrere Reihen von Vorratsbehältern und eine der Anzahl der Reihen entsprechende Anzahl von Fahrschienensystemen (31,32) mit Shuttles (35,39) und Wiegeeinrichtungen (33,34) vorgesehen sind, und dass am Kopf der Fahrschienensysteme (31,32) ein Quertransport (41) der Transportbehälter (27) vorgesehen ist.

9. Anlage nach einem der Ansprüche 1 bis 8, **dadurch gekennzeichnet, dass** jeder Transportbehälter (27) an gegenüberliegenden Seiten je zwei auf unterschiedlicher Höhe angeordnete Auflager (29,30) aufweist, deren Abstand voneinander etwas größer als der Abstand zwischen dem Shuttle (23,24) und der Wiegeeinrichtung (13,14) in der abgesenkten Position ist.

10. Anlage nach einem der Ansprüche 1 bis 9, **dadurch gekennzeichnet, dass** die Auflager (29,30) Teil eines den Transportbehälter (27) aufnehmenden Rahmens (28) bilden.

11. Anlage nach einem der Ansprüche 1 bis 10, **dadurch gekennzeichnet, dass** die Fahrschienen (21,22) und die Wiegeeinrichtungen (13,14) mittels einer Tragkonstruktion (10) hängend und bodenfrei angeordnet sind.

12. Anlage nach einem der Ansprüche 1 bis 11, **dadurch gekennzeichnet, dass** die Vorratsbehälter (2,3) mit den Dosiereinrichtungen (4,5) auf einer Gebäudedecke (1) oder einer Stahlkonstruktion angeordnet und die Zuläufe (6,7) durch diese nach unten hindurchgeführt sind, und dass die Tragkonstruktion (10) an der Unterseite der Gebäudedecke (1) oder der Stahlkonstruktion befestigt ist.

13. Anlage nach einem der Ansprüche 1 bis 12, **dadurch gekennzeichnet, dass** die Tragkonstruktion (10) Teil einer Stahlkonstruktion ist, auf der die Vorratsbehälter angeordnet sind.
